(19) **Europäisches Patentamt / European Patent Office / Office européen des brevets**

(11) **EP 3 149 813 B1**

(12) **FASCICULE DE BREVET EUROPEEN**

(45) Date de publication et mention de la délivrance du brevet:
**10.10.2018 Bulletin 2018/41**

(21) Numéro de dépôt: **15725588.6**

(22) Date de dépôt: **26.05.2015**

(51) Int Cl.:
*H01S 3/23* (2006.01)   *G02B 6/42* (2006.01)

(86) Numéro de dépôt international:
**PCT/EP2015/061524**

(87) Numéro de publication internationale:
**WO 2015/181130 (03.12.2015 Gazette 2015/48)**

(54) **SYSTEME DE MISE EN PHASE D'UN GRAND NOMBRE DE SOURCES LASER**

SYSTEM ZUR SYNCHRONISIERUNG EINER GROSSEN ANZAHL VON LASERQUELLEN

SYSTEM FOR PHASING A LARGE NUMBER OF LASER SOURCES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.05.2014 FR 1401222**

(43) Date de publication de la demande:
**05.04.2017 Bulletin 2017/14**

(73) Titulaire: **THALES**
**92400 Courbevoie (FR)**

(72) Inventeurs:
- **BOURDERIONNET, Jérôme**
  **F-91767 Palaiseau Cedex (FR)**
- **BRIGNON, Arnaud**
  **F-91767 Palaiseau Cedex (FR)**

(74) Mandataire: **Henriot, Marie-Pierre**
**Marks & Clerk France**
**Conseils en Propriété Industrielle**
**Immeuble Visium**
**22, Avenue Aristide Briand**
**94117 Arcueil Cedex (FR)**

(56) Documents cités:
US-A- 4 649 351        US-A1- 2009 185 176
US-A1- 2009 185 590

- LHERMITE J ET AL: "Coherent combining of 49 laser beams from a multiple core optical fibre by a spatial light modulator", OPTICS EXPRESS, OSA (OPTICAL SOCIETY OF AMERICA), WASHINGTON DC, (US), vol. 18, no. 5, 1 mars 2010 (2010-03-01), pages 4783-4789, XP002734919, ISSN: 1094-4087 [extrait le 2010-02-23]
- BOURDERIONNET J ET AL: "Collective coherent phase combining of 64 fibers", OPTICS EXPRESS, OSA (OPTICAL SOCIETY OF AMERICA), WASHINGTON DC, (US), vol. 19, no. 18, 29 août 2011 (2011-08-29), pages 17053-17058, XP002692038, ISSN: 1094-4087, DOI: 10.1364/OE.19.017053

**Description**

Le domaine de l'invention est celui de la recombinaison cohérente d'un grand nombre de sources lasers élémentaires.

La recombinaison cohérente de sources lasers s'applique notamment à la réalisation de sources lasers de forte puissance, et/ou de forte énergie dans le cas de sources impulsionnelles ultra-courtes, par exemple de largeur d'impulsion inférieure à la picoseconde.

L'obtention de sources laser de hautes puissances (ou énergies) et de grandes luminances est aujourd'hui limitée par la tenue au flux des matériaux à gain. Une solution à ce problème est de répartir l'amplification sur plusieurs milieux à gain en parallèle. Cela nécessite que les faisceaux laser en sortie de chaque milieu à gain soient en phase de sorte à assurer une recombinaison cohérente optimale de l'ensemble des faisceaux laser. Il faut donc compenser de manière dynamique les retards introduits sur un grand nombre M de faisceaux laser par la propagation à travers un ensemble de milieux à gain (amplificateurs fibrés par exemple) mis en parallèle. Une fois verrouillés en phase, les M faisceaux laser émergents interfèrent constructivement et constituent ainsi une source de luminance M fois supérieure à celle d'un amplificateur élémentaire, tout en gardant sa qualité de faisceau (limitée par diffraction dans le cas de fibres monomodes par exemple). Il s'agit donc de mettre en place autant de boucles à verrouillage de phase que d'émetteurs.

Les architectures de mise en phase de sources lasers peuvent être classifiées selon plusieurs critères. Le premier est la manière dont les faisceaux sont spatialement recombinés, ou superposés. On distingue ainsi 2 familles :

- Recombinaison en champ lointain (« tiled aperture ») : les M faisceaux lasers sont collimatés et ont des directions de propagation parallèles. Ce mode de recombinaison est l'équivalent optique de l'antenne à formation de faisceau en radar. Le champ lointain présente alors un lobe central intense, et des lobes secondaires parasites.
- Recombinaison en champ proche (« filled aperture ») : les M faisceaux sont superposés en champ proche, en utilisant des polariseurs ou un élément optique diffractif (ou « DOE » acronyme de l'expression anglo-saxonne Diffractive Optical Element). L'avantage de la méthode de recombinaison en champ proche est son efficacité, puisque l'on n'a pas dans ce cas de lobes secondaires dans le champ lointan (voir par exemple les documents US20090185590, US649351 et US20090185176).

Vient ensuite la nature du signal d'erreur, et le traitement qui va permettre de contre-réagir sur les phases entre sources lasers, et d'optimiser leur addition cohérente. On distingue essentiellement 4 méthodes de recombinaison cohérente de faisceaux lasers, classées selon la quantité d'information contenue dans le signal de contre-réaction :

- La méthode dite de « hill climbing » : le signal d'erreur est simplement constitué du prélèvement d'une fraction de l'énergie recombinée, qui est maximisée en jouant sur les phases des M canaux (faisceaux) à recombiner. Cette technique se base sur un algorithme d'optimisation par gradient à M-1 dimensions. La complexité repose ici sur l'algorithme de traitement, le signal d'erreur, un signal scalaire, étant extrêmement simple, et bas coût. L'inconvénient de cette méthode est la bande passante de la boucle, qui évolue en 1/M. Cette méthode se prête donc plutôt à un faible nombre de faisceaux recombinés typiquement inférieur à 10.
- La méthode dite « OHD » acronyme de l'expression anglo-saxonne « Optical Heterodyne Détection ». Pour cette méthode, le signal d'erreur qui est constitué de la mesure de la phase de chaque émetteur par rapport à un faisceau de référence, est un signal vectoriel ; on utilise un détecteur par canal. Les M mesures sont faites en parallèle par mélange hétérodyne et démodulation. Les inconvénients de cette méthode sont

  ◦ l'utilisation de composants RF, ce qui pénalise le coût par canal,
  ◦ le recours à un faisceau de référence,
  ◦ le signal d'erreur qui est mesuré avant recombinaison et qui ne garantit pas une qualité de recombinaison optimale : il ne permet pas de compenser les fluctuations de phase entre le plan de mesure des phases et le plan de recombinaison. Une calibration du système est alors requise.

- La méthode dite « LOCSET », ou « Synchronous Multi-Dither ». Comme pour le « hill climbing », cette méthode utilise une fraction de l'énergie recombinée comme signal d'erreur, mais dans ce cas, les contributions des différents canaux sont identifiées en « marquant » en fréquence chaque canal par une modulation RF à une fréquence qui lui est propre. Le signal d'erreur pour chaque faisceau est alors obtenu par mélange hétérodyne avec un faisceau de référence. Cette méthode est attractive car elle ne nécessite qu'un unique détecteur, et la disponibilité de modulateurs de phase rapides permet d'envisager un grand nombre de canaux. En revanche, elle nécessite un grand nombre de composants RF dans la boucle de contre-réaction (mélangeurs, modulateurs,...), ce qui augmente considérablement le coût par canal du système. On obtient un signal similaire en modulant séquentiellement dans le temps chacun des faisceaux, cette fois à la même fréquence, mais au détriment de la bande passante du système.

- La méthode de mesure directe des phases entre émetteurs, pour laquelle le signal d'erreur est une cartographie des phases extraites de l'interférogramme des faisceaux à recombiner interférant soit entre eux, soit avec un faisceau de référence. Cette méthode de mesure interférométrique directe est collective : l'ensemble des phases est obtenue par l'enregistrement d'une seule image par un capteur matriciel, et se prête donc parfaitement à un grand nombre d'émetteurs. Le coût de l'imageur utilisé est à diviser par le nombre de canaux et n'est donc pas déterminant. La bande passante du système peut en revanche être limitée par le capteur utilisé, spécialement dans l'infrarouge. Ce n'est cependant pas une limite fondamentale. Finalement, comme pour la méthode « OHD », la mesure de phase est effectuée avant recombinaison ; elle ne permet pas de compenser les fluctuations de phase entre le plan de mesure des phases et le plan de recombinaison et ne garantit donc pas une qualité de recombinaison optimale. Une calibration du système est alors requise.

Le tableau ci-dessous résume l'état de l'art des techniques de recombinaison cohérente. Les cases grisées indiquent les points négatifs de chaque méthode.

| Nature du signal d'erreur | Scalaire | Vectoriel | | |
|---|---|---|---|---|
| Méthode | « Hill Climbing » | « LOCSET » | « OHD » | Mesure interf. directe |
| Nb détecteurs (pour M sources) | 1 | 1 | M | >2M |
| Bande passante | Evolue en 1/M | >10kHz | >10kHz | Limité par caméra (potentiellement >1-10kHz) |
| Calibration requise | Non | Non | Oui | Oui |
| Besoin électronique RF (impacte le coût) | Non | Oui | Oui | Non |
| Besoin d'une référence optique | Non | Non | Oui | Pas nécessairement (QWLSI in [11]) |
| Type de recombinaison le mieux adapté | Champ proche | Champ proche | Champ lointain | Champ lointain |

Il est donc besoin d'une architecture de recombinaison cohérente de faisceaux lasers qui satisfasse à la fois les conditions d'une bande passante de boucle >1kHz, d'un nombre de faisceaux potentiellement de 100, 1000 voire au-delà, d'un fonctionnement sans calibration (signal d'erreur dans le plan de recombinaison), et d'un faible coût.

Comme déjà indiqué au-dessus, il existe un système dans lequel les faisceaux laser sont recombinés spatialement à l'aide d'un élément optique diffractif (DOE). Un tel système peut aussi permettre, en plus d'assurer la recombinaison spatiale des faisceaux, de générer un signal d'erreur permettant de compenser les écarts de phase entre sources lasers. Ce signal d'erreur est calculé à partir des intensités diffractées sur les ordres supérieurs de l'élément diffractif de recombinaison (voir les documents US20090185590 et US20090185176). Le cadre de l'invention est celui d'un tel système selon la revendication 1.

On obtient bien un signal d'erreur vectoriel (de taille donnée par le nombre d'ordres de diffraction supérieurs mesurés) mais sans avoir à utiliser des composants RF. De plus, le système par principe ne requiert pas de calibration, puisque l'optimisation ne vise pas le verrouillage des phases (cf techniques « OHD » et « mesure interférométrique directe »), mais bien directement l'intensité recombinée (en minimisant l'intensité des ordres supérieurs).

On regroupe donc les avantages suivants :

- Comme pour les méthodes « LOCSET » et « hill climbing », le signal d'erreur est généré dans le plan de recombinaison, donc pas de calibration requise.
- Le signal d'erreur est constitué d'un ensemble de mesures non-redondantes qui permettent par un traitement simple de générer le signal de contre-réaction.
- Le coût du système par canal (faisceau) est relativement faible puisqu'aucun élément RF n'intervient, et qu'un seul détecteur par canal est nécessaire.
- Le système est compatible d'un grand nombre de canaux, et d'une bande passante >1kHz.

Selon le cadre de l'invention, les moyens de calcul du signal de contre-réaction comprennent des moyens de calcul du produit de la distribution des intensités détectées dans le plan de la matrice des détecteurs par l'inverse d'une matrice de dimension (2M-1) x (2M-1) si M est impair, et 2M x 2M si M est pair, définie par des coefficients obtenus par développement en série de Fourier de la phase de l'élément optique diffractif de recombinaison prise sur une période.

On a typiquement M>100.

De préférence, les sources sont disposées selon une configuration spatiale à une ou deux dimensions.

Selon un mode de réalisation préférentiel de l'invention, les faisceaux issus des sources laser ont un même plan de sortie, et le système comprend alors une autre lentille de Fourier ayant un plan objet dans lequel est situé le plan de sortie des sources laser et un plan image dans lequel est situé l'élément optique diffractif de recombinaison.

D'autres caractéristiques et avantages de l'invention apparaîtront à la lecture de la description détaillée qui suit, faite à titre d'exemple non limitatif et en référence aux dessins annexés dans lesquels :

la figure 1 illustre schématiquement l'utilisation d'un élément optique diffractif comme moyen de recombinaison de faisceaux de « M vers 1 » (5 vers 1 sur l'exemple de la figure),
la figure 2 représente schématiquement un exemple de système de mise en phase,
les figures 3 montrent schématiquement un profil d'intensité pour un élément optique diffractif utilisé en séparateur de 1 vers M (de 1 vers 5 dans l'exemple de la figure) (fig 3a), ou utilisé en moyen de recombinaison de faisceaux de M vers 1 (de 5 vers 1 dans l'exemple de la figure) avec la distribution des intensités diffractées par l'élément optique diffractif.

D'une figure à l'autre, les mêmes éléments sont repérés par les mêmes références.

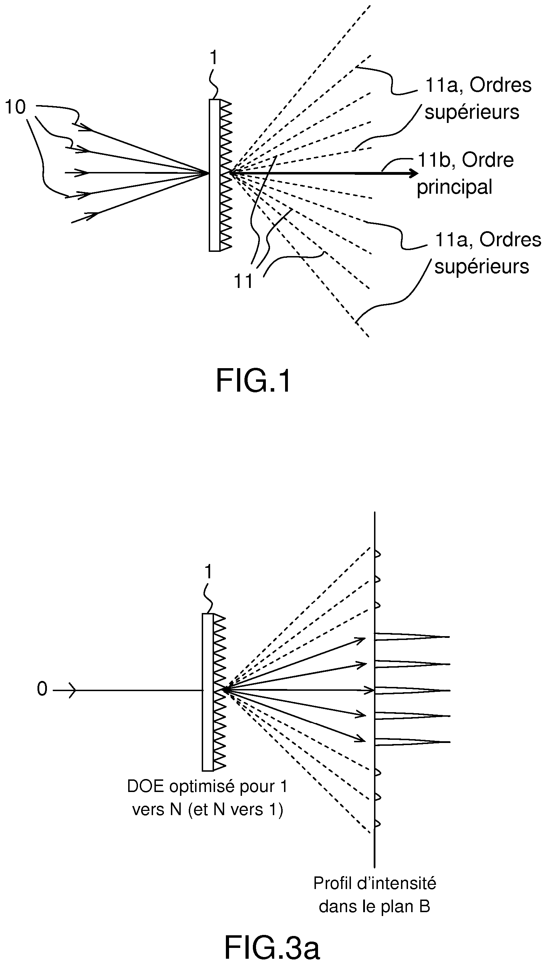

Le cadre de l'invention selon la revendication 1 est celui d'un système qui repose tout d'abord sur l'utilisation d'un élément optique diffractif 1 (ou DOE) comme moyen de recombinaison de différents faisceaux laser 10, comme représenté sur l'exemple de la figure 1. Les faisceaux lasers 10 sont incidents sur le DOE 1 selon un angle défini par la période spatiale du DOE. Lorsque les faisceaux sont verrouillés en phase, et avec la distribution de phase optimale (imposée par le DOE), alors tous les faisceaux interfèrent constructivement sur l'ordre 0 (= ordre principal) du DOE 11b, et destructivement sur les ordres supérieurs 11a.

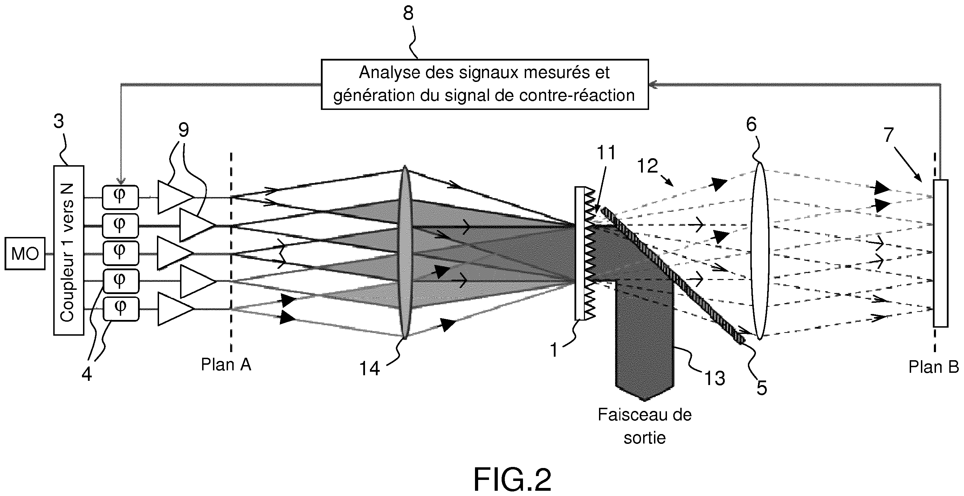

Le principe est d'utiliser la distribution d'intensité 11a diffractée sur les ordres supérieurs du DOE comme signal d'erreur pour optimiser la recombinaison, comme représenté sur l'exemple de la figure 2. Dans notre approche, comme pour les techniques de LOCSET et de « hill climbing », le signal d'erreur est mesuré en bout de chaine (c'est-à-dire après le DOE), ce qui permet de prendre en compte l'ensemble des perturbations subies par les faisceaux. A noter que si l'exemple de la figure 2 représente une disposition en ligne des faisceaux lasers, et donc un DOE à 1 dimension, la solution proposée s'applique cependant de manière équivalente à un agencement 2D des faisceaux lasers et un DOE à 2 dimensions.

On décrit un système de mise en phase de M sources lasers en relation avec la figure 2. Les M sources laser ont même longueur d'onde centrée autour de $\lambda_0$. Ces sources laser peuvent être des sources impulsionnelles ; la largeur d'impulsion peut aussi être inférieure à $10^{-12}$ s.

Le système comporte :

- M modulateurs de phase : un modulateur 4 en sortie de chaque source laser.
- Un DOE 1 de recombinaison à réseau de phase de période spatiale prédéterminée, situé dans le plan image d'une lentille de Fourier 14 :
les M faisceaux issus des modulateurs sont dirigés sur le DOE 1 par cette lentille de Fourier 14. Chaque faisceau arrive sur le DOE avec un angle d'incidence spécifique défini par la période spatiale du DOE.
- Des moyens de prélèvement d'une fraction 12 des faisceaux recombinés 11, qui peuvent être un miroir à haute réflectivité 5 (avec un prélèvement d'1% par exemple) ou un cube séparateur de polarisation. On choisit de préférence un prélèvement <1/M. L'autre fraction de faisceaux recombinés constitue le faisceau de sortie 13 du système.

- Une seconde lentille de Fourier 6 dans le plan objet de laquelle est situé le DOE de recombinaison 1.
- Une matrice de détecteurs 7 dans le plan image (= plan B) de la seconde lentille de Fourier 6, apte à détecter les distributions d'intensité 11b, 11a de la fraction des ordres de diffraction des faisceaux recombinés par le DOE 1.
- Des moyens 8 de calcul du signal de contre-réaction à partir de ces distributions dans le plan de la matrice de détecteurs. Ces moyens de calcul 8 sont reliés aux M modulateurs de phase 4 de manière à les contrôler.

Les M faisceaux peuvent être dirigés sur le DOE 1 de différentes façons. Le système comporte par exemple en amont du DOE :

- un même oscillateur maître 2 relié à un coupleur 3 « 1 vers M » de manière à générer les M sources laser,
- éventuellement M amplificateurs 9 respectivement reliés aux modulateurs de phase 4.

Le plan de sortie (= plan A) des M faisceaux laser (issus des amplificateurs ou des modulateurs) est situé dans le plan objet de la lentille de Fourier 14, selon une configuration spatiale périodique de pas P comme montré sur la figure 2.

Selon une alternative, les M sources laser ont une lentille de collimation associée à chaque source et sont directement positionnées selon une configuration spatiale et angulaire périodique, de manière à ce que les faisceaux arrivent sur le DOE de recombinaison avec un angle d'incidence spécifique défini par la période spatiale du DOE.

On considère à présent les moyens 8 de calcul du signal de contre-réaction selon l'invention. Le problème à résoudre par ces moyens de calcul est donc ainsi posé :

- La variable du problème est la distribution spatiale du champ électromagnétique constitué de la superposition des champs électromagnétiques issus de chacune des sources lasers.
- Les distributions d'intensité du champ électromagnétique sont supposées connues en 2 plans distincts : une distribution $I_A$ uniforme (ou mesurée) dans le plan de sortie des sources (plan A sur la figure 2) et une distribution $I_B$ mesurée après recombinaison par le DOE (dans le plan B sur la figure 2).

On veut calculer les distributions de phases $\varphi_A$ et $\varphi_B$ dans les plans A et B telles que le champ électromagnétique $\sqrt{I_A}e^{j\varphi_A}$ propagé numériquement de A en B donne $\sqrt{I_B}e^{j\varphi_B}$.

Ce problème s'apparente à celui de la mesure d'aberrations de phase à partir de distorsions d'images d'intensité rencontré par exemple en astronomie. Des exemples de méthodes de résolution de ce problème peuvent être trouvés dans la littérature. On peut citer les publications suivantes : R. G. Paxman and J. R. Fienup, "Optical misalignment sensing and image reconstruction using phase diversity," J. Opt. Soc. Am. A 5, 914-923 (1988), ou J. N. Cederquist, J. R. Fienup, C. C. Wackerman, S. R. Robinson, and D. Kryskowski, "Wave-front phase estimation from Fourier intensity measurements," J. Opt. Soc. Am. A 6, 1020-1026 (1989), ou R.G. Paxman, T.J. Schulz, J.R. Fienup, "Joint estimation of object and aberrations by using phase diversity," J. Opt. Soc. Am. A 9, 1072-1085 (1992).

Un inconvénient majeur de ce type de méthodes est qu'elles font appel à des transformées de Fourier numérique (pour les calculs de type propagation optique de A vers B dans la recherche de la solution) ce qui implique un temps de calcul qui peut être long (typiquement très supérieur à 1s). On peut également citer la publication : J. Bourderionnet et al., "Collective coherent phase combining of 64 fibers" Optics Express, vol. 19, no. 18, pages 17053 - 17058, 29.08.2011.

Dans le système selon l'invention, une simplification majeure pour le calcul de phase vient du fait que le calcul de la distribution de champ électromagnétique dans le plan B à partir de celle du plan A s'effectue par un simple produit par une matrice connue.

En effet, pour M faisceaux lasers considérés en A, la distribution de champ électrique en A peut s'écrire, selon la parité de M :

$$E_A(x) = e^{-\left(\frac{x}{\omega}\right)^2} * \left( \sum_{k=-N}^{+N} e^{i\varphi_k}\delta(x - kP) \right)$$

si M=2N+1, ou :

$$E_A(x) = e^{-\left(\frac{x}{\omega}\right)^2} * \left( \sum_{k=-N+1}^{+N} e^{i\varphi_k} \delta(x - kP) \right)$$

si M=2N.

Soit encore :

$$E_A(x) = e^{-\left(\frac{x}{\omega}\right)^2} * \left( \sum_{k=-\infty}^{+\infty} \alpha_k e^{i\varphi_k} \delta(x - kP) \right)$$

Avec :

- ω la taille (« waist » en anglais) des faisceaux (supposés gaussiens) dans le plan A,
- P la période des positions des faisceaux dans le plan A,
- $\alpha_k$ le coefficient de pondération en amplitude du kème faisceau (par exemple ici, $\alpha_k$=1 pour k compris entre -N et +N pour M=2N+1 et k compris entre -N+1 et +N pour M=2N, et $\alpha_k$=0 sinon)
- $\varphi_k$ la phase optique du kème faisceau,
- δ la fonction de Dirac et * l'opérateur convolution.

Le champ dans le plan du DOE s'obtient par transformée de Fourier de $E_A(x)$ et multiplication par la fonction de transmission en phase du DOE, $e^{i\varphi_{DOE}(u)}$ :

$$E_{DOE}(u) = \frac{1}{P} e^{-(\pi u \omega)^2} \times e^{i\varphi_{DOE}(u)} \times \left( \sum_{k=-\infty}^{+\infty} \alpha_k e^{i\varphi_k} e^{-2i\pi ukP} \right)$$

Le champ propagé jusqu'au plan de mesure (plan B) s'obtient à nouveau par la transformée de Fourier de $E_{DOE}(u)$ :

$$E_B(x) = \left[ e^{-\left(\frac{x}{\omega}\right)^2} * \mathcal{F}\left(e^{i\varphi_{DOE}(u)}\right) \right] * \sum_{k=-\infty}^{+\infty} \alpha_k e^{i\varphi_k} \delta(x + kP)$$

De plus, la phase du DOE étant par construction une fonction périodique, de période 1/P (u étant considéré en champ lointain), on peut écrire $e^{i\varphi_{DOE}(u)}$ sous la forme de sa série de Fourier :

$$e^{i\varphi_{DOE}(u)} = \sum_{k=-\infty}^{+\infty} c_k e^{2i\pi ukP}$$

Et donc :

$$E_B(x) = e^{-\left(\frac{x}{\omega}\right)^2} * \left[\sum_{h=-\infty}^{+\infty} \alpha_h e^{i\varphi_h} \, \delta(x + hP) * \sum_{k=-\infty}^{+\infty} c_k \, \delta(x - kP)\right]$$

$$= e^{-\left(\frac{x}{\omega}\right)^2} * \left[\sum_{h=-\infty}^{+\infty} \alpha_h e^{i\varphi_h} \times \sum_{k=-\infty}^{+\infty} c_k \, \delta(x - (k - h)P)\right]$$

$$= e^{-\left(\frac{x}{\omega}\right)^2} * \left[\sum_{k=-\infty}^{+\infty} \left(\sum_{h=-\infty}^{+\infty} c_{k+h} \alpha_h e^{i\varphi_h}\right) \times \delta(x - kP)\right]$$

$$= \sum_{k=-\infty}^{+\infty} \left(\sum_{h=-\infty}^{+\infty} c_{k+h} \alpha_h e^{i\varphi_h}\right) \times e^{-\left(\frac{x-kP}{\omega}\right)^2}$$

Un DOE de combinaison est calculé pour combiner M faisceaux vers 1. A l'inverse, 1 faisceau unique diffracté par le même DOE produira essentiellement M faisceaux (dits principaux) d'intensité du même ordre ($\approx I_1$), et une infinité d'ordres supérieurs d'intensité $I_2$ moindre ($I_2 \ll I_1$). En d'autres termes, cela implique les relations suivantes pour les coefficients $c_k$ :

$|c_k|^2 \approx \sqrt[1]{M}$ pour k compris entre -N et +N pour M=2N+1 et k compris entre -N+1 et +N pour M=2N,
$|c_k|^2 \ll 1/_M$ sinon.

Les termes $c_{k+h}\alpha_h$ de l'expression de $E_B(x)$ ci-dessus pourront donc avoir des valeurs non négligeables pour :

$$[-N \leq k + h \leq +N] \cup [-N \leq h \leq +N] \text{ pour M=2N+1 ou}$$

ou

$$[-N + 1 \leq k + h \leq +N] \cup [-N + 1 \leq h \leq +N] \text{ pour M=2N.}$$

Soit :

$$k \in \{-2N, \cdots, +2N\} \text{ pour M=2N+1 ou}$$

ou

$$k \in \{-2N + 1, \cdots, +2N\} \text{ pour M=2N.}$$

D'une manière générale, l'expression de $E_B(x)$ pourra donc être considérée comme exacte pour des indices k et h tronqués de -2N à +2N pour M=2N+1 :

$$E_B(x) = \sum_{k=-2N}^{+2N} \left(\sum_{h=-2N}^{+2N} c_{k+h} \alpha_h e^{i\varphi_h}\right) \times e^{-\left(\frac{x-kP}{\omega}\right)^2}$$

ou de -2N+1 à +2N pour M=2N :

$$E_B(x) = \sum_{k=-2N+1}^{+2N} \left(\sum_{h=-2N+1}^{+2N} c_{k+h} \alpha_h e^{i\varphi_h}\right) \times e^{-\left(\frac{x-kP}{\omega}\right)^2}$$

On reconnait alors l'expression d'un produit matriciel, ainsi qu'écrit ci-dessous pour le cas M=2N+1 :

$$
\begin{vmatrix} E_{B,-2N} \\ \vdots \\ E_{B,0} \\ \vdots \\ E_{B,+2N} \end{vmatrix} = \begin{pmatrix} c_{-4N} & \cdots & c_{-2N} & \cdots & c_0 \\ \vdots & \ddots & \vdots & \ddots & \vdots \\ c_{-2N} & \cdots & c_0 & \cdots & c_{2N} \\ \vdots & \ddots & \vdots & \ddots & \vdots \\ c_0 & \cdots & c_{2N} & \cdots & c_{4N} \end{pmatrix} \times \begin{vmatrix} \alpha_{-2N}e^{i\varphi_{-2N}} \\ \vdots \\ \alpha_0 e^{i\varphi_0} \\ \vdots \\ \alpha_{+2N}e^{i\varphi_{+2N}} \end{vmatrix}
$$

Soit :

$$
\begin{vmatrix} E_{B,-2N} \\ \vdots \\ E_{B,0} \\ \vdots \\ E_{B,+2N} \end{vmatrix} = H_{DOE} \times \begin{vmatrix} E_{A,-2N} \\ \vdots \\ E_{A,0} \\ \vdots \\ E_{A,+2N} \end{vmatrix}
$$

Avec $E_{A,k}$ (et respectivement $E_{B,k}$) les coefficients de pondération complexes du champ $E_A(x)$ (et respectivement $E_B(x)$) tels que, au voisinage de $x = kP$ :

$$
E_A(x) = E_{A,k} \times e^{-\left(\frac{x-kP}{\omega}\right)^2}
$$

$$
E_B(x) = E_{B,k} \times e^{-\left(\frac{x-kP}{\omega}\right)^2}
$$

$H_{DOE}$ est la matrice définie par les coefficients $c_k$ du développement en série de Fourier de la phase du DOE prise sur une période. Cette matrice est donc connue a priori par construction du DOE. Comme vu ci-dessus, en pratique, avec un DOE calculé pour combiner M faisceaux lasers, avec M impair égal à 2N+1, 2M-1 coefficients sont nécessaires dans la série de Fourier pour assurer l'égalité :

$$
e^{i\varphi_{DOE}(u)} = \sum_{k=-2N}^{+2N} c_k e^{2i\pi u kP}
$$

Pour M pair égal à 2N, 2M coefficients sont alors nécessaires pour avoir :

$$
e^{i\varphi_{DOE}(u)} = \sum_{k=-2N+1}^{+2N} c_k e^{2i\pi u kP}
$$

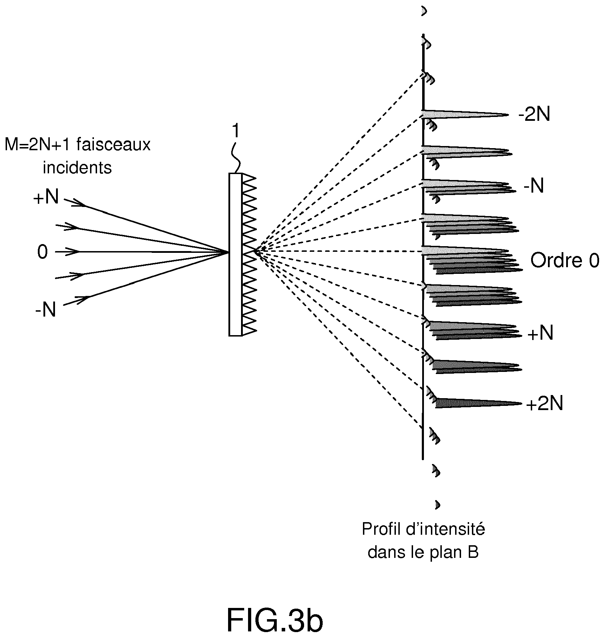

Ce choix, non restrictif, de 2M-1 coefficients dans le cas M=2N+1 est également illustré sur les figures 3a et 3b par le fait que seuls les ordres diffractés d'ordre -2N à +2N (soit dans le plan B au voisinage de x= kP pour $k \in \{-2N, \cdots, 2N\}$) ont une intensité significative pour le calcul.

La propagation optique de M faisceaux du plan A vers le plan B se calcule donc par le simple produit d'une matrice de dimension (2M-1) x (2M-1) pour M impair, et 2M x 2M pour M pair (la matrice H_DOE) par le vecteur E_A. On a remplacé les transformations de Fourier utilisées dans les méthodes habituelles par cette matrice H_DOE. Donc le calcul de la distribution de champ électromagnétique dans le plan A à partir de celle détectée dans le plan B par la matrice de photo détecteurs, s'effectue par un simple produit de l'inverse de cette matrice H_DOE par cette distribution d'intensité détectée dans le plan B.

A partir de la distribution de champ électromagnétique ainsi calculée dans le plan A, on calcule la phase de manière classique. Ce calcul simplifié de la distribution de champ électromagnétique dans le plan A, accélère considérablement les algorithmes de calcul de phase (= calcul du signal de contre-réaction), par exemple de type recherche de maximum ou itératifs, et permet une implémentation temps réel de ces moyens de calcul du signal de contre-réaction, même pour un nombre de faisceaux de plusieurs milliers. Comme exemple de calcul de phase par itérations, on peut citer les calculs décrits dans les publications :

- J. Markham and J.A. Conchello, "Parametric blind deconvolution : a robust method for the simultaneous estimation of image and blur," J.Opt.Soc.Am.A 16(10), 2377-2391 (1999),
- J.R. Fienup, "Phase retrieval algorithms: a comparison," Appl. Opt. 21(15), 2758-2769(1982).

Sur les exemples, le DOE de combinaison fonctionne en transmission, mais le système selon l'invention reste valable en utilisant un DOE en réflexion.

**Revendications**

1.  Système de mise en phase de M sources laser de même longueur d'onde centrée autour de $\lambda_0$, présentant une configuration spatiale périodique, M étant un entier>2, qui comprend :

    - des moyens pour collimater et diriger les M faisceaux issus des sources sur un élément optique diffractif de recombinaison (1) à réseau de phase périodique, avec un angle d'incidence $\theta_{2k}$ différent d'un faisceau à l'autre, ces angles d'incidence étant déterminés en fonction de la période du réseau, et
    - des moyens de contrôle des phases desdites sources à partir d'un signal de contre-réaction issu des faisceaux recombinés,
    - des moyens (5) de prélèvement d'une fraction (12) des faisceaux recombinés,
    - sur le trajet de cette fraction des faisceaux recombinés, une lentille de Fourier (6) ayant un plan objet et un plan image, avec l'élément optique diffractif de recombinaison (1) dans son plan objet,
    - une matrice de détecteurs (7) dans le plan image de la lentille de Fourier (6), apte à détecter des distributions d'intensité de la fraction des faisceaux recombinés,

    **caractérisé en ce qu'**il comprend :

    - des moyens (8) de calcul du signal de contre-réaction à partir de ces distributions d'intensité qui comprennent des moyens de calcul du produit de la distribution des intensités détectées dans le plan de la matrice des détecteurs par l'inverse d'une matrice de dimension (2M-1) x (2M-1) pour M impair et 2M x 2M pour M pair, définie par des coefficients obtenus par développement en série de Fourier de la phase de l'élément optique diffractif de recombinaison prise sur une période.

2.  Système de mise en phase de sources laser selon l'une des revendications précédentes, **caractérisé en ce que** les sources laser sont impulsionnelles.

3.  Système de mise en phase de sources laser selon la revendication précédente, **caractérisé en ce que** la largeur d'impulsion est inférieure à $10^{-12}$s.

4.  Système de mise en phase de sources laser selon l'une des revendications précédentes, **caractérisé en ce que** M>100.

5.  Système de mise en phase de sources laser selon l'une des revendications précédentes, **caractérisé en ce que** la fraction prélevée est <1/M.

6.  Système de mise en phase de sources laser selon l'une des revendications précédentes, **caractérisé en ce que** les sources sont disposées selon une configuration spatiale à une ou deux dimensions.

7.  Système de mise en phase de sources laser selon l'une des revendications précédentes, **caractérisé en ce que** les faisceaux issus des sources laser ayant un même plan de sortie, il comprend une autre lentille de Fourier (14) ayant un plan objet dans lequel est situé le plan de sortie des sources laser et un plan image dans lequel est situé l'élément optique diffractif de recombinaison (1).

**Patentansprüche**

1. System zur Phasensynchronisierung von M Laserquellen gleicher Wellenlänge, welche um $\lambda_0$ zentriert ist, welche eine periodische räumliche Konfiguration aufweisen, wobei M eine Ganzzahl >2 ist, Folgendes beinhaltend:

   - Mittel zur Kollimation und zum Richten der M Strahlen, entstammend aus den Quellen, auf ein diffraktives optisches Rekombinationselement (1) mit periodischem Phasengitter, mit einem Einfallwinkel $\theta_{2k}$, welcher sich von einem Strahl zum anderen unterscheidet, wobei diese Einfallwinkel anhand der Periode des Gitters bestimmt werden, und
   - Mittel zum Prüfen der Phasen der Quellen anhand eines Gegenreaktionssignals, welches den rekombinierten Strahlen entstammt,
   - Mittel (5) zur Entnahme eines Anteils (12) der rekombinierten Strahlen,
   - auf der Bahn dieses Anteils der rekombinierten Strahlen, eine Fourier-Linse (6), welche eine Objektebene und eine Bildebene besitzt, mit dem diffraktiven optischen Rekombinationselement (1) in ihrer Objektebene,
   - eine Detektoren-Matrix (7) in der Bildebene der Fourier-Linse (6), welche in der Lage ist, Intensitätsverteilungen des Anteils der rekombinierten Strahlen zu detektieren,

   **dadurch gekennzeichnet, dass** es Folgendes beinhaltet:

   - Mittel (8) zur Berechnung des Gegenreaktionssignals anhand dieser Intensitätsverteilungen, welche Mittel zur Berechnung des Produkts der in der Ebene der Detektoren-Matrix detektierten Intensitätsverteilungen beinhalten, durch eine Dimensions-Kehrmatrix (2M-1) x (2M-1), wenn M ungeradzahlig ist und 2M x 2M, wenn M geradzahlig ist, definiert durch Koeffizienten, welche durch Fourier-Reihenentwicklung der in einer Periode abgenommenen Phase des diffraktiven optischen Rekombinationselementes erzielt werden.

2. System zur Phasensynchronisierung von Laserquellen nach einem der vorhergehenden Ansprüche, **dadurch gekennzeichnet, dass** die Laserquellen Impulsquellen sind.

3. System zur Phasensynchronisierung von Laserquellen nach dem vorhergehenden Anspruch, **dadurch gekennzeichnet, dass** die Impulsbreite kleiner als $10^{-12}$s ist.

4. System zur Phasensynchronisierung von Laserquellen nach einem der vorhergehenden Ansprüche, **dadurch gekennzeichnet, dass** M>100 ist.

5. System zur Phasensynchronisierung von Laserquellen nach einem der vorhergehenden Ansprüche, **dadurch gekennzeichnet, dass** der entnommene Anteil <1/M ist.

6. System zur Phasensynchronisierung von Laserquellen nach einem der vorhergehenden Ansprüche, **dadurch gekennzeichnet, dass** die Laserquellen in einer räumlichen Konfiguration mit einer oder zwei Dimensionen angeordnet sind.

7. System zur Phasensynchronisierung von Laserquellen nach einem der vorhergehenden Ansprüche, **dadurch gekennzeichnet, dass**, da die aus den Laserquellen entstammenden Strahlen eine selbe Ausgangsebene besitzen, es eine weitere Fourier-Linse (14) beinhaltet, welche eine Objektebene besitzt, in welcher die Ausgangsebene der Laserquellen liegt, und eine Bildebene, in welcher das diffraktive optische Rekombinationselement (1) liegt.

**Claims**

1. A system for phasing M laser sources with the same wavelength centred around $\lambda_0$, having a periodic spatial configuration, with M being an integer > 2, which system comprises:

   - means for collimating and directing the M beams originating from the sources on a combining diffractive optical element (1) with a periodic phase grating, with an angle of incidence $\theta_{2k}$ that differs from one beam to the next, said angles of incidence being determined as a function of the period of the grating; and
   - means for controlling the phases of said sources on the basis of a feedback signal originating from the combined beams;
   - means (5) for sampling a fraction (12) of the combined beams;

- a Fourier lens (6) on the path of said fraction of the combined beams, said lens having an object plane and an image plane, with the combining diffractive optical element (1) in its object plane;
- a matrix of detectors (7) in the image plane of the Fourier lens (6) capable of detecting intensity distributions of the fraction of the combined beams;

**characterised in that** it comprises:

- means (8) for computing the feedback signal on the basis of said intensity distributions, which means comprise means for computing the product of the distribution of the intensities detected in the plane of the matrix of detectors through the inverse of a (2M-1) x (2M-1) sized matrix if M is odd and of a 2M x 2M sized matrix if M is even, defined by coefficients obtained by the Fourier series development of the phase of the combining diffractive optical element, sampled over a period.

2. The system for phasing laser sources as claimed in any one of the preceding claims, **characterised in that** the laser sources are pulse sources.

3. The system for phasing laser sources as claimed in the preceding claim, **characterised in that** the pulse width is less than $10^{-12}$s.

4. The system for phasing laser sources as claimed in any one of the preceding claims, **characterised in that** M > 100.

5. The system for phasing laser sources as claimed in any one of the preceding claims, **characterised in that** the sampled fraction is < 1/M.

6. The system for phasing laser sources as claimed in any one of the preceding claims, **characterised in that** the sources are disposed in a one-dimensional or two-dimensional spatial configuration.

7. The system for phasing laser sources as claimed in any one of the preceding claims, **characterised in that**, with the beams originating from the laser sources having the same exit plane, it comprises another Fourier lens (14) having an object plane in which the exit plane of the laser sources is located and an image plane in which the combining diffractive optical element (1) is located.

**FIG.1**

DOE optimisé pour 1
vers N (et N vers 1)

Profil d'intensité
dans le plan B

**FIG.3a**

M=2N+1 faisceaux
incidents

+N

0

-N

1

-2N

-N

Ordre 0

+N

+2N

Profil d'intensité
dans le plan B

# FIG.3b

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090185590 A
- US 649351 A
- US 20090185176 A


**Littérature non-brevet citée dans la description**

- **R. G. PAXMAN ; J. R. FIENUP.** Optical misalignment sensing and image reconstruction using phase diversity. *J. Opt. Soc. Am. A,* 1988, vol. 5, 914-923
- **J. N. CEDERQUIST ; J. R. FIENUP ; C. C. WACKERMAN ; S. R. ROBINSON ; D. KRYSKOWSKI.** Wave-front phase estimation from Fourier intensity measurements. *J. Opt. Soc. Am. A,* 1989, vol. 6, 1020-1026
- **R.G. PAXMAN ; T.J. SCHULZ ; J.R. FIENUP.** Joint estimation of object and aberrations by using phase diversity. *J. Opt. Soc. Am. A,* 1992, vol. 9, 1072-1085
- **J. BOURDERIONNET et al.** Collective coherent phase combining of 64 fibers. *Optics Express,* 29 Août 2011, vol. 19 (18), 17053-17058
- **J. MARKHAM ; J.A. CONCHELLO.** Parametric blind deconvolution : a robust method for the simultaneous estimation of image and blur. *J. Opt. Soc. Am. A,* 1999, vol. 16 (10), 2377-2391
- **J.R. FIENUP.** Phase retrieval algorithms: a comparison. *Appl. Opt.,* 1982, vol. 21 (15), 2758-2769